# EUROPÄISCHE PATENTANMELDUNG

(11) **EP 1 431 811 A1**
(43) Veröffentlichungstag der Anmeldung: **23.06.2004**
(21) Anmeldenummer: 02028669.6
(22) Anmeldetag: 20.12.2002
(51) Int. Cl.: G03B 42/02, G01T 1/29, H04N 1/00, H04N 1/04, H04N 1/12, H04N 1/14

(54) **Vorrichtung zum Auslesen einer Bildinformation aus einem fotostimulierbaren Bildträger**

(71) Anmelder: Agfa-Gevaert AG, 51373 Leverkusen (DE)
(72) Erfinder: Müller, Jürgen, 81545 München (DE)

(57) **Zusammenfassung**

Die Erfindung betrifft eine Vorrichtung zum Auslesen einer Bildinformation aus einem fotostimulierbaren Bildträger (44) mit einem Gehäuse (12), in dem ein Scanner (10) zum Erfassen der Bildinformation des Bildträgers (44) vorgesehen ist, wobei an dem Gehäuse (12) eine Einrichtung (20) zum Sichtbarmachen der erfassten Bildinformation angebracht ist.

## Beschreibung

Die Erfindung betrifft eine Vorrichtung zum Auslesen einer Bildinformation aus einem fotostimulierbaren Bildträger mit einem Gehäuse, in dem ein Scanner zum Erfassen der Bildinformation des Bildträgers vorgesehen ist.

Eine derartige gattungsgemäße Vorrichtung ist in der DE 196 46 606 beschrieben. Nach dieser Druckschrift sind folgende Komponenten für ein digitales Radiographieverfahren wesentlich:

Eine Röntgenkassette enthält einen fotostimulierbaren Bildträger, insbesondere eine Phosphorfolie. Eine solche Röntgenkassette wird nach Aufnahme eines Röntgenbildes und Identifizierung der Kassette in ein Verarbeitungsgerät für den Bildträger eingegeben. Dort öffnet eine mechanische Einrichtung die Röntgenkassette und entnimmt die Phosphorfolie. Über eine Transporteinrichtung wird die Phosphorfolie dann einer Lesestation zugeführt, mit Hilfe der die Phosphorfolie angeregt und das von der Phosphorfolie ausgesandte Licht ausgewertet wird. Die erfassten Signale werden verstärkt und digitalisiert an einen Computer mit Bildspeicher weitergeleitet. Das digitalisierte Bild ist schließlich an einem Diagnosebildschirm auswertbar oder über eine digitale Schnittstelle an eine Hardcopyeinrichtung ausgebbar, die das Bild als Ausdruck auf einem fotografischen Film wiedergibt. Zumindest ein Teil des oben beschriebenen Verarbeitungsgeräts kann auch als Scanner bezeichnet werden, der von einem Gehäuse umgeben ist.

Nachteilig an diesem Aufbau aus mehreren "stand alone"-Komponenten für einen kompletten Röntgenarbeitsplatz ist der erhebliche Platzbedarf. Um dieses Problem zu lösen, wurden die einzelnen Geräte in verschiedenen Räumen aufgestellt. Der Betrieb eines Scanners ist jedoch ohne Kontrolle der erfassten Bildinformation nicht sinnvoll. Der Aufwand im Arbeitsablauf und der technische Aufwand werden durch die getrennte Positionierung erhöht.

Der Erfindung liegt daher die Aufgabe zu Grunde, eine Vorrichtung bereitzustellen, die diese Nachteile nicht aufweist.

Die Aufgabe wird gelöst durch eine gattungsgemäße Vorrichtung, bei der an dem Gehäuse, in welchem der Scanner zum Erfassen der Bildinformation des Bildträgers vorgesehen ist, eine Einrichtung zum Sichtbarmachen der erfassten Bildinformation angebracht ist.

Durch eine derartige Kombination kann auf platzsparende Weise ein nahezu kompletter Röntgenarbeitsplatz realisiert werden, so dass ein optimaler Arbeitsablauf gewährleistet ist. Die Kompaktheit dieser Vorrichtung spart zusätzlich technischen Aufwand für User Interface, Steuerung und Verknüpfung der Einzelgeräte. Dies gilt insbesondere dann, wenn neben einer rein mechanischen Kopplung der beiden Elemente auch sogenannte "plug and play"-Anschlüsse realisiert sind. Ein Bedien-, Service- und Diagnoseterminal werden dabei in einem kombinierten System zusammengefasst.

Eine erste besonders vorteilhafte Weiterbildung der Erfindung sieht vor, dass das Gehäuse eine Öffnung zum Zuführen des in einer Kassette befindlichen Bildträgers zu dem Scanner aufweist. Eine solche Öffnung kann insbesondere an den Seitenwänden des Gehäuses vorgesehen sein.

Vorteilhafterweise kann die Einrichtung zum Sichtbarmachen der erfassten Bildinformation eine Einheit, gegebenenfalls mit einem weiteren Gehäuse, aufweisen, die einen Bildschirm und/oder ein Bedienfeld zum Modifizieren der erfassten Bildinformation umfasst. Während die erfasste Bildinformation durch den Bildschirm sichtbar gemacht werden kann, dient ein Bedienfeld dem Modifizieren der erfassten Bildinformation. Dabei können beispielsweise verschiedene Dichtestufen, eine Zoomfunktion und/oder ein Differenzbild realisiert werden. Durch die Kombination von Bildschirm und Bedienfeld kann die Bearbeitung der Bildinformation durch einen Anwender direkt überprüft werden. Besonders komfortabel ist die Ausgestaltung des Bedienfeldes als Touch Screen. Außerdem kann das Bedienfeld auch dazu ausgebildet sein, den Scanner zu bedienen.

In einer besonders vorteilhaften Ausgestaltung der Erfindung ist der Bildschirm und/oder das Bedienfeld im Wesentlichen vor dem Gehäuse angeordnet. Insbesondere, wenn die Öffnung zum Zuführen des in einer Kassette befindlichen Bildträgers an den Seitenwänden des Gehäuses angeordnet ist, muss die Frontfläche des Gehäuses, in dem der Scanner angeordnet ist, nicht zugänglich sein, so dass durch die Anordnung des Bildschirms und/oder des Bedienfeldes im Wesentlichen vor dem Gehäuse eine kompakte Kombination der Komponenten ermöglicht wird.

Außerdem kann die Vorrichtung eine Hardcopyeinrichtung umfassen, um eine Hardcopy von der erfassten Bildinformation herzustellen. Die Hardcopyeinrichtung ist in einer vorteilhaften Weiterbildung der Erfindung im Wesentlichen neben dem Gehäuse angeordnet.

Dabei kann ein Gehäuse der Hardcopyeinrichtung so ausgebildet und mit dem Gehäuse, in dem der Scanner angeordnet ist, so verbunden sein, dass das Gehäuse der Hardcopyeinrichtung als Führung für eine dem Scanner zuzuführende Kassette dient. Das Gehäuse der Hardcopyeinrichtung hat daher eine Doppelfunktion, die wiederum zur Kompaktheit der erfindungsgemäßen Vorrichtung beiträgt.

Optimalerweise sind das Gehäuse der Hardcopyeinrichtung und das Gehäuse, in dem der Scanner angeordnet ist, mit jeweils einer größten Seitenfläche im Wesentlichen entlang einer Ebene angeordnet. Mit diesen Seitenflächen können diese Elemente dann beispielsweise entlang einer Wand angeordnet werden. Auch dadurch wird ein Beitrag zur Platzersparnis geleistet.

Eine weitere vorteilhafte Ausgestaltung der Erfindung sieht vor, dass die Hardcopyeinrichtung und/oder der Scanner und/oder die Einheit modular zusammensetzbar sind. Wie bereits oben erwähnt, ist dabei insbesondere eine sogenannte "plug and play"-Kombination von Vorteil, bei der nicht nur eine mechanische Kopplung der einzelnen Komponenten erfolgt, sondern ebenfalls eine elektrische Verknüpfung der Geräte vorgenommen wird. Die einzelnen Komponenten weisen zu diesem Zweck besondere Verknüpfungselemente auf. Durch die modulare Zusammensetzung ist der Röntgenarbeitsplatz auch durch einen ungeübten Anwender leicht aufbaubar, wobei außerdem eine hohe Flexibilität gewährleistet ist, da einzelne Geräte leicht entfernt beziehungsweise hinzugefügt werden können.

Die Vorrichtung kann außerdem zur hängenden Wandmontage ausgebildet sein, wodurch zusätzlich Platz gespart wird und auch im Stehen eine komfortable Bedienung der erfindungsgemäßen Vorrichtung erleichtert wird. Da die Bedienung häufig unter erheblichem Zeitdruck erfolgt, ist generell von einer Anwendung durch eine stehende Person auszugehen. Das Gehäuse kann zur hängenden Wandmontage mindestens einer Ausgestaltung zur Aufhängung an eine Wand, insbesondere mindestens ein Aufhängeelement, aufweisen. Alternativ kann auch eine separate Aufhängevorrichtung vorgesehen sein, die an der Wand befestigt wird und gleichzeitig die erfindungsgemäße Vorrichtung aufnehmen kann. In diesem Fall ist eine besondere Ausgestaltung der Vorrichtung zur Verbindung mit der Aufhängevorrichtung nötig.

Eine weitere Weiterbildung der Erfindung sieht vor, dass die mindestens eine Ausgestaltung zur Aufhängung derart ausgebildet ist, dass die Vorrichtung höhenverstellbar ist. Die Höhenverstellbarkeit hat folgende Vorteile: Einerseits kann die Höhe der erfindungsgemäßen Vorrichtung der jeweiligen Größe des stehenden Anwenders angepasst werden. Außerdem kann die Vorrichtung bei Nichtbenutzen der Erfindung in eine Position überführt werden, durch die andere Tätigkeiten, die in dem Raum, in dem sich die Vorrichtung befindet, ausgeübt werden sollen, nicht beeinträchtigt werden. Weiterhin kann die Vorrichtung auf diese Weise sowohl im Stehen als auch im Sitzen bedient werden, je nach dem, wie es der aktuelle Anwender wünscht.

Die Vorrichtung kann dabei derart zur hängenden Wandmontage ausgebildet sein, dass das Gehäuse mit einer größten Seitenfläche des Gehäuses im Wesentlichen parallel zu einer Wand an der Wand montierbar ist. Die Vorrichtung liegt dann relativ flach an der Wand an.

Eine weitere besonders vorteilhafte Ausgestaltung der Erfindung sieht vor, dass der Scanner derart ausgebildet ist, dass der fotostimulierbare Bildträger innerhalb des Scanners im Wesentlichen parallel zu einer größten Seitenfläche des Gehäuses auslesbar und/oder bewegbar ist. Auf diese Weise kann der Scanner besonders flach ausgestaltet sein.

Außerdem kann in dem Gehäuse, in dem der Scanner angeordnet ist, auch eine Löscheinrichtung zum Löschen der Bildinformation des Bildträgers vorgesehen sein. Der Bildträger kann dann direkt nach dem Auslesen der Bildinformation für eine erneute Röntgenaufnahme verwendet werden, ohne vorher durch ein separates System gelöscht zu werden.

Weitere Einzelheiten, Merkmale und Vorteile der Erfindung ergeben sich aus den im Folgenden anhand von Zeichnungen beschriebenen Ausführungsbeispielen.

Es zeigen:
- Fig.1: ein schematisch dargestellter Aufbau einer Ausführungsform einer erfindungsgemäßen Vorrichtung;
- Fig. 2: eine schematische Darstellung einer weiteren Ausführungsform einer erfindungsgemäßen Vorrichtung;
- Fig. 3: eine schematisch dargestellte Frontansicht eines Scanners einer erfindungsgemäßen Vorrichtung;
- Fig. 4: eine schematisch dargestellte Rückansicht eines Scanners einer erfindungsgemäßen Vorrichtung;
- Fig. 5: eine teilweise als Querschnitt dargestellte schematische Ansicht eines Scanners einer erfindungsgemäßen Vorrichtung;
- Fig. 6: eine schematisch dargestellte Frontansicht einer Hardcopyeinrichtung einer erfindungsgemäßen Vorrichtung;
- Fig. 7: eine schematisch dargestellte Rückansicht einer Hardcopyeinrichtung einer erfindungsgemäßen Vorrichtung; und
- Fig. 8: eine teilweise geschnittene Darstellung einer Hardcopyeinrichtung einer erfindungsgemäßen Vorrichtung.

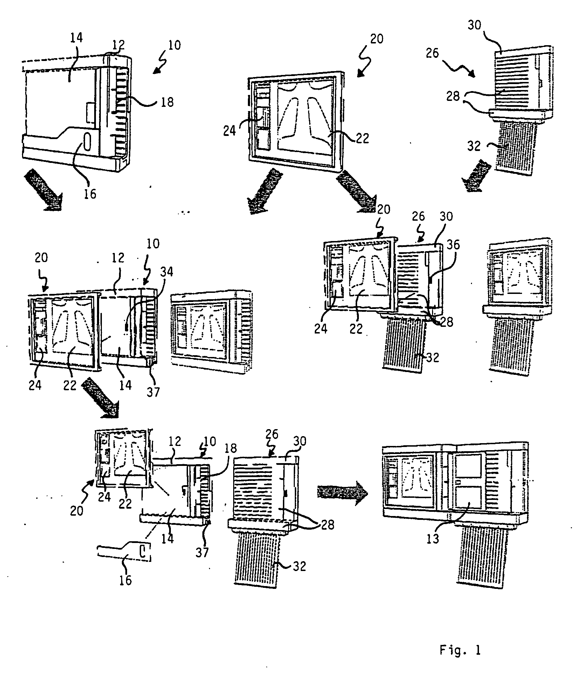

Figur 1 zeigt eine modular aufgebaute Vorrichtung zur Durchführung eines digitalen Radiographie-Verfahrens. Die hier dargestellte Ausführungsform dieser Vorrichtung umfasst im Wesentlichen bis zu drei Komponenten.

Eine erste Komponente bildet ein Scanner 10 mit einem Gehäuse 12. Der Scanner 10 dient den Erfassen einer Bildinformation eines in einer Kassette 13 bereitgestellten fotostimulierbaren Bildträgers, welcher eine Phosphorschicht umfaßt. Die Kassette 13 mit dem auszulesenden Bildträger wird hierzu einer seitlichen Öffnung 18 des Scanners 10 zugeführt. Dies ist im rechten unteren Teil der Figur 1 beispielhaft dargestellt. Aus Gründen einer besseren Anschaulichkeit wurde auf die Darstellung der Kassette 13 in den anderen Figurenteilen verzichtet.

Der Scanner 10 weist im Frontbereich, d. h. in einem Bereich vor dem Scanner 10, eine Kassettenhalterung auf, welche zur Aufnahme mindestens einer Kassette 13 mit dem auszulesenden Bildträger ausgebildet ist. Ein Halterungselement 14 der Kassettenhalterung wird hierbei durch einen Gehäusebereich, im dargestellten Beispiel eine Frontplatte, des Scanners 10 gebildet. Ein weiteres, abnehmbares Halterungselement 16 ist derart am Gehäuse 12 des Scanners 10 angeordnet, daß mindestens eine Kassette 13 zwischen den beiden Halterungselementen 14 und 16 gehalten werden kann. In der Kassettenhalterung können Kassetten 13 im Frontbereich des Scanners 10 gelagert werden, bevor oder nachdem sie im Scanner 10 ausgelesen werden bzw. worden sind.

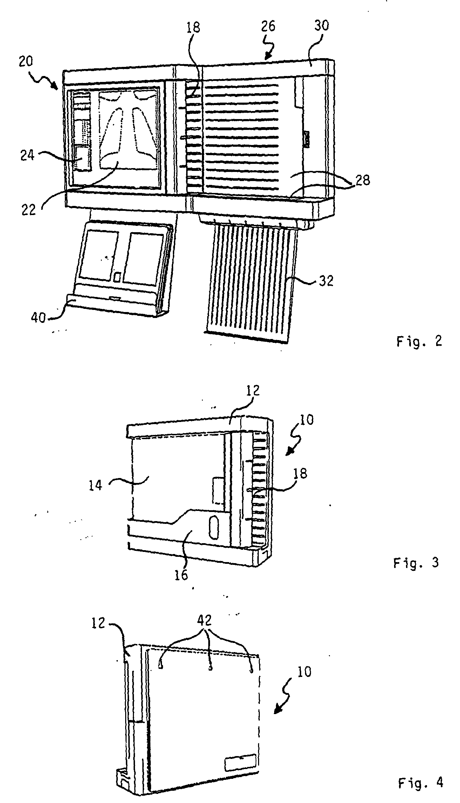

Alternativ oder zusätzlich kann aber auch eine laterale Kassettenhalterung (nicht dargestellt) vorgesehen sein, die seitlich des Scanners 10 positioniert ist und auf diese Weise gleichzeitig dazu dient, eine oder mehrere Kassetten 13 für den Scanprozess bereitzustellen. Vorzugsweise ist die laterale Kassettenhalterung derart ausgebildet und im Bereich der Öffnung 18 des Scanners 10 angeordnet, dass die von ihr aufgenommenen Kassetten direkt der Öffnung 18 des Scanners 10 zugeführt werden können. Wie weiter unten im Zusammenhang mit dem in Figur 2 dargestellten Ausführungsbeispiel noch näher erläutert wird, kann die Kassettenhalterung auch unterhalb des Scanners 10 positioniert werden.

Da der in Figur 1 dargestellte Scanner 10 dazu geeignet ist, Bildinformationen von Bildträgern unterschiedlicher Größe zu erfassen, müssen auch die Halterungselemente 14 bzw. 16 der Kassettenhalterung derart ausgebildet sein, dass sie unterschiedlich große Kassetten aufnehmen können. Aus diesem Grund ist es auch zweckmäßig, mehrere Kassettenhalterungen vorzusehen, die für jeweils eine Kassettengröße optimal dimensioniert sind. Generell erhöht die Anordnung einer Kassettenhalterung in der unmittelbaren Nähe des Scanners 10 die Geschwindigkeit des Arbeitsvorgangs, der mit dem Auslesen der Bildinformation verbunden ist. Vorteilhafterweise ist die Kassettenhalterung stets parallel zum Scanner 10 angeordnet.

Als zweite Komponente der Vorrichtung ist eine Workstationeinrichtung 20 zum Sichtbarmachen der erfassten Bildinformation vorgesehen. Neben einer zentralen Recheneinheit (nicht dargestellt), in welcher die im Scanner 10 erfassten, digitalen Bildinformationen verarbeitet und/oder gespeichert werden können, umfasst die Workstationeinrichtung 20 einen Bildschirm 22 zur visuellen, insbesondere graphischen, Darstellung der erfassten Bildinformation. Um Platz zu sparen, wird als Bildschirm 22 vorzugsweise ein Flachbildschirm auf der Basis von Flüssigkristallen (LCDs) und Dünnschichttransistoren (TFTs) eingesetzt.

Zusätzlich zur Darstellung der erfassten Bildinformation kann der Bildschirm 22 auch so ausgestaltet sein, daß dieser als Hintergrundbeleuchtung für konventionelle Röntgenfilme dienen kann. Vorzugsweise ist hierzu der Bildschirm 22 in einem Beleuchtungsmodus betreibbar, in welchem die Bildschirmfläche einen gleichmäßig hellen, Licht aussendenden Hintergrund bildet. Vor diesen hellen Hintergrund können Röntgenfilme angebracht und betrachtet werden.

Darüber hinaus umfasst die Workstationeinrichtung 20 ein Bedienfeld 24 zur Steuerung der Workstationeinrichtung 20 und/oder zum Modifizieren der erfassten Bildinformation. Das Bedienfeld 24 ist vorzugsweise als sogenanntes Touch Screen ausgebildet, bei welchem in einer entsprechend ausgestalteten Anzeigeeinrichtung Symbole für einzelne Steuerungselemente und/oder Betriebsmodi angezeigt und durch Berühren betätigt bzw. ausgewählt werden können.

Vorzugsweise werden der Bildschirm 22 und das Bedienfeld 24 in einem einzigen Touch Screen zusammengefaßt, bei welchem in der Anzeigeeinrichtung neben den Steuerungselementen und/oder Betriebsmodi auch die erfaßten digitalen Bildinformationen darstellt werden. Hierdurch wird eine einfach herzustellende und besonders kompakte Variante der Vorrichtung erhalten.

Alternativ zu der in Figur 1 dargestellten Workstationeinrichtung 20 kann diese auch lediglich einen Bildschirm 22 oder ein Bedienfeld 24 aufweisen. Eine Kombination dieser beiden Elemente, die eine Einheit bilden, hat jedoch den Vorteil, dass jede Modifizierung der Bildinformation zeitgleich auf dem Bildschirm 22 dargestellt werden kann, wodurch der Anwender der Vorrichtung den jeweiligen Effekt der Modifizierungen unmittelbar kontrollieren kann.

Durch das Bedienfeld 24 können auch die anderen Komponenten der Vorrichtung bedient werden, so dass das Bedienfeld 24 als zentrale Steuerplattform dient.

Wie aus Figur 1 ersichtlich ist, ist der Bildschirm 22 im Wesentlichen parallel zu einer größten Seitenfläche der Workstationeinrichtung 20 angeordnet. Durch Verwendung eines oben beschriebenen Flachbildschrims wird so eine besonders flache Gestaltung, also eine geringe Gerätetiefe, der Workstationeinrichtung 20 gewährleistet.

Als eine dritte Komponente ist eine Hardcopyeinrichtung 26 vorgesehen. Diese Hardcopyeinrichtung 26 dient der Herstellung einer Hardcopy mit der ausgelesenen Bildinformation des Bildträgers ausgehend von einem Hardcopyrohling, wie z. B. einem entsprechend geeigneten Bogen aus Papier, beschichtetem Papier oder Kunststofffolie. Ein Gehäusebereich der Hardcopyeinrichtung 26 bildet eine Kassettenhalterung 28, welche zur Aufnahme wenigstens einer Kassette 13 ausgebildet ist.

Außerdem kann das Innere des Gehäuses 30 zur Aufnahme von Hardcopyrohlingen ausgebildet sein, wobei das Gehäuse 30 insbesondere im Bereich der Kassettenhalterung 28 geöffnet werden kann, um die Hardcopyrohlinge in die Hardcopyeinrichtung 26 einzuführen.

Für fertige Hardcopies, gegebenenfalls aber auch für Hardcopyrohlinge, ist eine vorzugsweise lösbar am Gehäuse 30 der Hardcopyeinrichtung 26 befestigte Halterung 32 vorgesehen. Die Halterung 32 ist im dargestellten Beispiel eine Auflagefläche mit einer Stoßkante am unteren Ende der Fläche, die in einem flachen Winkel zur Vertikalen geneigt ist.

Da die Hardcopyrohlinge bzw. die Hardcopies stets parallel zur größten Seitenfläche der Hardcopyeinrichtung 26 aufgenommen, gelagert sowie während des Bedruckens transportiert und ausgegeben werden, ist eine äußerst flache Ausgestaltung der Hardcopyeinrichtung 26 realisiert.

Die Workstationeinrichtung 20 kann nun entweder vor dem Gehäuse 12 des Scanners 10 und/oder vor dem Gehäuse 30 der Hardcopyeinrichtung 26 angeordnet und an dem jeweiligen Gehäuse 12 bzw. 30, vorzugsweise lösbar, befestigt werden. Sowohl die Hardcopyeinrichtung 26 als auch der Scanner 10 können zur Verbindung mit der Workstationeinrichtung 20 sogenannte "plug and play"-Anschlüsse 34 und 36 aufweisen. Durch die Verbindung der einzelnen Komponenten mittels "plug and play"-Anschlüssen kann ein Daten- und Stromfluß zwischen den Komponenten auf einfache Weise realisiert werden. Mindestens ein entsprechender Anschluß, der in Figur 1 aus perspektivischen Gründen nicht zu sehen ist, befindet sich an der Workstationeinrichtung 20. Durch die "plug and play"-Anschlüsse wird ein einfaches Zusammensetzen der einzelnen Komponenten ermöglicht, ohne die Komponenten durch Leitungen verbinden zu müssen.

Dieses modulare System wird außerdem durch geeignete Ausgestaltungen zur mechanische Kopplung der Komponenten, wie z. B. einfach lösbare Klemmund/oder Schnappverbindungen am Gehäuse 12 bzw. 30 der Komponenten, ergänzt. Je nach Ausgestaltung der Komponenten kann vorgesehen sein, dass, wie hier für das Halterungselement 16 beispielhaft gezeigt, einzelne Elemente vor der modularen Kopplung entfernt werden müssen.

Neben den oben beschriebenen Kombinationen kann beispielsweise auch eine Kopplung von Scanner 10 und Hardcopyeinrichtung 26 oder eine Kombination von Hardcopyeinrichtung 26 und Workstationeinrichtung 20 vorgesehen sein.

Bei der Kombination von Scanner 10 und Hardcopyeinrichtung 26 kann die erfasste Bildinformation, ohne vorher auf einem Bildschirm 22 betrachtet zu werden, als Hardcopy ausgegeben werden. Ein solches System ist für solche Anwendungsfälle, wie z.B. Standarduntersuchungen oder Untersuchungsreihen, besonders geeignet, in denen Hardcopies einer großen Anzahl von Röntgenbildern angefertigt werden müssen, ohne dass eine vorherige visuelle Kontrolle und gegebenenfalls Manipulation der erfassten Bilddaten erwünscht oder erforderlich ist.

Besonders bevorzugt ist die Ausführungsform mit allen drei Komponenten, nämlich Scanner 10, Workstationeinrichtung 20 und Hardcopyeinrichtung 26. Wie bei der Verbindung von zwei Komponenten kann die Hardcopyeinrichtung 26 zu diesem Zweck durch "plug and play"-Anschlüsse 37 und zusätzlich gegebenenfalls auch durch mechanische Ausgestaltungen mit dem Scanner 10 verbunden werden. Diese beiden Komponenten sind dann entlang einer Ebene nebeneinander angeordnet. Die Kassettenhalterung 28 der Hardcopyeinrichtung 26 kann in diesem Fall genauso wie bei einer Kombination von Scanner 10 und Hardcopyeinrichtung 26 der Zuführung von Kassetten 13 in die Öffnung 18 des Scanners 10 dienen. Diese Funktion kann auch realisiert werden, wenn die Hardcopyeinrichtung 26 lediglich nahe dem Scanner 10 angeordnet ist, wobei die Kassettenhalterung 28 in diesem Fall entsprechend modifiziert werden muß. Außerdem ist eine Verbindung von Scanner 10 und Hardcopyeinrichtung 26 durch ein Zwischenelement denkbar, das gegebenenfalls auch zur Bereitstellung der Kassette für den Scanner 10 beitragen kann.

Es ist außerdem zu berücksichtigen, dass auch die Kombination von Workstationeinrichtung 20 und Hardcopyeinrichtung 26, wie sie in der Figur 1 dargestellt ist, mit dem Scanner seitlich verbunden werden kann.

Durch die Kombination der drei Elemente Scanner 10, Workstationeinrichtung 20 und Hardcopyeinrichtung 26 wird ein äußerst kompaktes System bereitgestellt, das alle Funktionen eines herkömmlichen, sehr viel Raum einnehmenden Röntgenarbeitsplatzes bestens erfüllt. Im Gegensatz zu den aus dem Stand der Technik bekannten "stand alone"-Geräten ermöglicht die Erfindung eine vollständige Installation des Röntgenarbeitsplatzes in einem Röntgenraum, der durch die notwendige Abschirmung räumlich meist sehr begrenzt ist.

In Figur 2 ist eine weitere alternative Ausführungsform einer Vorrichtung zur Durchführung eines digitalen Radiographie-Verfahrens schematisch dargestellt. Auch hier besteht die Vorrichtung aus einem Scanner (nicht sichtbar), vor dem eine Workstationeinrichtung 20 angebracht ist und neben dem eine Hardcopyeinrichtung 26 positioniert ist. Auch diese Hardcopyeinrichtung 26 weist eine Halterung 32 für mindestens eine Hardcopy und/oder mindestens einen Hardcopyrohling auf. Unterhalb der Workstationeinrichtung 20 ist außerdem eine zur Aufnahme mehrerer Kassetten 13 ausgebildete weitere Kassettenhalterung 40 vorgesehen, in welcher die Kassetten 13 vorzugsweise vor und/oder nach dem Auslesen im Scanner 10 gelagert werden können. Die Kassettenhalterung 40 kann entweder am Scanner oder an der Workstationeinrichtung 20, insbesondere lösbar, befestigt sein.

Soll die Bildinformation eines in einer Kassette 13 befindlichen Bildträgers ausgelesen werden, wird die entsprechende Kassette 13 von einem Bediener aus der Kassettenhalterung 40 entnommen und an der Öffnung 18 des Scanners positioniert. Die Kassette 13 wird hierzu an die Kassettenhalterung 28 am Gehäuse 30 der Hardcopyeinrichtung 26 angelegt und schließlich zur Öffnung 18 des Scanners geführt. Diese Position der Kassette 13 ist auch im rechten unteren Teil des in Figur 1 dargestellten Ausführungsbeispiels gezeigt. Von dieser Position aus kann der in der Kassette 13 befindliche Bildträger mit einem, vorzugsweise im Scanner befindlichen, Transportmechanismus aus der Kassette 13 in den Scanner eingezogen und dort ausgelesen werden. Nach dem Auslesen wird der Bildträger wieder in die Kassette 13 zurückgeführt, wonach diese von der Öffnung 18 des Scanners entfernt und gegebenenfalls wieder in der Kassettenhalterung 40 abgelegt werden kann.

Figur 3 zeigt den in Figur 1 dargestellten Scanner 10 in einer vergrößerten Frontansicht. Die Ausführungen im Zusammenhang mit dem in Figur 1 beschriebenen Scanner 10 gelten entsprechend. Eine Rückansicht dieses Scanners 10 ist schematisch in Figur 4 wiedergegeben. In dieser Ansicht sind Ausgestaltungen zur Aufhängung 42 dargestellt. Diese Ausgestaltungen 42 können mit an einer Wand vorgesehenen Schienen oder anderen Befestigungselementen wechselwirken, die eine Höhenverstellbarkeit erlauben. Alternativ kann die Höhenverstellbarkeit auch durch entsprechende Ausgestaltungen 42 zur Aufhängung an dem Gehäuse 12 des Scanners 10 erreicht werden. Die Höhenverstellbarkeit ist äußerst vorteilhaft, da auf diese Weise die Position des Scanners 10 den individuellen Bedürfnissen angepasst werden kann. Durch die Aufhängung des Scanners 10 wird gleichzeitig eine Aufhängung der anderen mit dem Scanner verbundenen Komponenten erreicht.

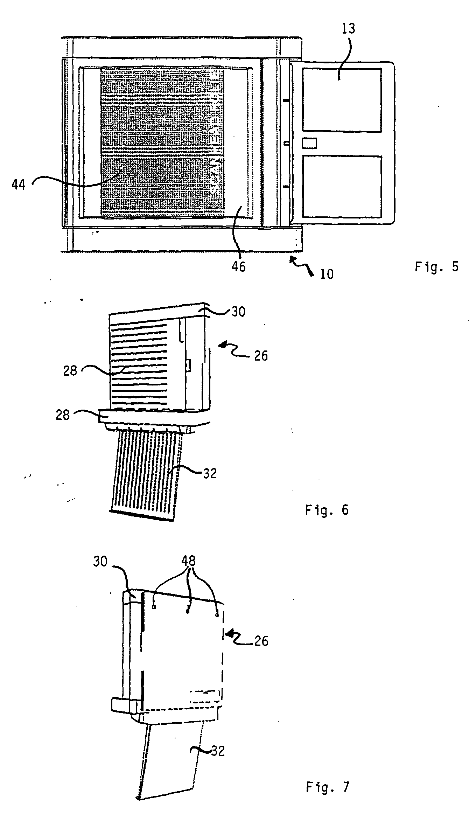

In Figur 5 ist der Scanner 10 in einer aufgehängten Stellung teilweise im Querschnitt dargestellt. In diesem Beispiel liegt der mittels einer geeigneten Transporteinrichtung (nicht dargestellt) aus der Kassette 13 entnommene Bildträger 44 auf einer Scanbühne 46 im Inneren des Scanners 10 und kann in dieser Lage ausgelesen werden. Die Scanbühne 46 ist im Wesentlichen parallel oder leicht geneigt zu der Wand angeordnet, an welcher der Scanner 10 aufgehängt ist. Dadurch wird eine besonders flache Ausführung des Scanners 10 gewährleistet, wobei eine Gerätetiefe von weniger als 30 cm erreicht wird.

Die Bildinformation wird vorzugsweise zeilenweise ausgelesen, wobei ein beweglicher Scankopf über den auf der Scanbühne 46 im Scanner 10 liegenden Bildträger 44 bewegt wird oder der Bildträger 44 an einem stationären Scankopf vorbeibewegt wird. Letzeres erfolgt vorzugsweise während der Entnahme des Bildträgers 44 aus der Kassette 13 oder dessen Rückführung in die Kassette 13. Der entsprechende stationäre Scankopf ist hierbei im Bereich der Öffnung 18 im Innern des Scanners 10 angeordnet.

Zur Erreichung einer möglichst geringen Gerätetiefe des Scanners 10 ist ein besonders kompakter Aufbau des Scankopfes erforderlich. Der Scankopf weist hierzu eine linienförmige Lichtquelle zur Beleuchtung eines linienförmigen Bereichs des Bildträgers und einen linienförmigen Detektor zur ortsaufgelösten Erfassung des im beleuchteten Bereich des Bildträgers angeregten Emissionslichts auf. Als Lichtquelle werden vorzugsweise Leuchtdioden oder Laserdioden eingesetzt, die in der Weise entlang einer Reihe angeordnet sind, dass sich deren Lichtstrahlen derart überlagern, dass auf dem Bildträger ein linienförmiger Bereich mit im Wesentlichen konstanter Intensität beleuchtet wird. Als ortsauflösender Detektor wird vorzugsweise ein lineares Array aus Photodioden oder Charge-Coupled-Devices (CCDs) eingesetzt. Ein derart aufgebauter Scankopf erlaubt ein zeilenweises und damit schnelles Auslesen von Bildinformation aus dem Bildträger und ist darüber hinaus sehr kompakt, so daß hierdurch eine sehr geringe Gerätetiefe des Scanners 10 und damit auch der gesamten Vorrichtung zur Durchführung eines digitalen Radiographie-Verfahrens erzielt wird.

Werden Scankopf und Bildträger mit einem geeigneten Transportmechanismus kontinuierlich relativ zueinander bewegt und dabei sukzessive Zeile für Zeile der Bildinformation des Bildträgers ausgelesen, werden schließlich Daten eines Gesamtbildes der im Bildträger gespeicherten Bildinformation erhalten. Die, insbesondere digitalen, Daten können dann in einer zentralen Recheneinheit, insbesondere in der Workstationeinrichtung 20, verarbeitet, dargestellt und/oder gespeichert werden.

Ein entsprechender Transportmechanismus zur Bewegung des Scankopfes über den Bildträger umfaßt vorzugsweise einen Linearantrieb, bei welchem die Rotationsbewegung eines Antriebsmotors in eine Linearbewegung eines Seilantriebs, durch welchen der Scankopf bewegt wird, umgesetzt wird. Der Scankopf wird hierbei bevorzugt an der Scanbühne 46 selbst geführt, wobei die Scanbühne entsprechende separate Führungsflächen aufweisen kann, an welchen der Scankopf geführt wird. Auf diese Weise werden besonders geringe Abstands- und Lagetoleranzen bei gleichzeitig kompaktem Aufbau des Transportmechanismus erreicht.

Als kompakter und zuverlässiger Mechanismus zur Bewegung des Bildträgers am stationären Scankopf vorbei eignet sich beispielsweise ein im Scanner 10 angeordneter Greifarm, welcher zum Herausziehen des Bildträgers aus der Kassette und zum Hineinschieben des Bildträgers in die Kassette geeignet ist und dabei den Bildträger am Scankopf kontinuierlich vorbeibewegt, so daß ein sukzessives zeilenweises Auslesen der Bildinformation erfolgen kann. Der Bildträger weist hierzu geeignete Konturen auf, insbesondere Aussparungen, in welche der Greifarm eingreifen kann.

Im Scanner 10 kann außerdem eine Löscheinrichtung (nicht dargestellt), insbesondere eine Löschlampe, vorgesehen sein, mit deren Hilfe die Bildinformation des Bildträgers nach dem Ausleseprozess gelöscht wird, damit der Bildträger für eine erneute Röntgenaufnahme verwendet werden kann. Die Löscheinrichtung kann im Scanner 10 derart angebracht und angesteuert sein, dass eine vollständige Löschung der nach dem Auslesen im Bildträger verbliebenen Bildinformation während der Rückführung des Bildträgers in die Kassette erfolgt. Dies wird beispielsweise durch eine Anordnung der Löscheinrichtung im Bereich der Öffnung 18 des Scanners 10 und ein Einschalten der Löscheinrichtung während der Rückführung des Bildträgers erreicht. Alternativ kann die Löscheinrichtung am Scankopf angebracht sein und mit diesem über den Bildträger bewegt werden. In einer weiteren Alternative kann das von der Löschlampe ausgehende Licht mit geeigneten optischen Mitteln, wie z. B. Spiegeln und/oder lichtstreuenden Mitteln, derart im Inneren des Scanners 10 verteilt werden, daß ein Löschen der gesamten Fläche des Bildträgers auf einmal möglich ist. Die Löschlampe wird hierbei zum gegebenen Zeitpunkt kurz ein- und wieder ausgeschaltet.

In Figur 6 ist eine vergrößerte schematische Frontansicht einer Hardcopyeinrichtung 26 dargestellt, wobei die Ausführungen zu Figur 1 entsprechend gelten. Wie aus der Rückansicht dieser Hardcopyeinrichtung 26 in Figur 7 hervorgeht, kann auch die Hardcopyeinrichtung 26 Ausgestaltungen 48 zur Aufhängung aufweisen, die der Wandmontage dienen. Auch hier kann eine Höhenverstellbarkeit durch entsprechende Modifizierung der Ausgestaltungen 48 und/oder der entsprechenden Befestigungselemente an der Wand und/oder durch eine demgemäß geartete Aufhängevorrichtung realisiert werden. Bei einer Kombination von Scanner 10 und Hardcopyeinrichtung 26 können beide Komponenten oder nur der Scanner entsprechende Ausgestaltungen zur Aufhängung aufweisen, da die Komponenten so koppelbar sind, dass die Hardcopyeinrichtung 26 durch den Scanner 10 bei der Wandmontage gehalten wird.

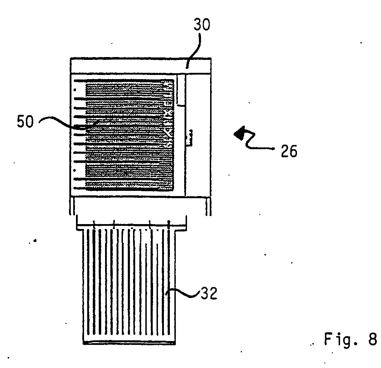

In Figur 8 ist die Hardcopyeinrichtung 26 teilweise im Querschnitt an einer Wand montiert dargestellt. Es ist zu erkennen, dass die Hardcopyrohlinge 50 im Innern der Hardcopyeinrichtung 26 nahezu parallel zur größten Seitenfläche der Hardcopyeinrichtung 26 und damit auch parallel zur Wand gelagert werden können und dass diese entlang einer ebenfalls parallelen oder leicht geneigten Printebene positionierbar sind. Auch der Transport der Hardcopyrohlinge bzw. der Hardcopies kann im Wesentlichen parallel zu einer größten Seitenfläche der Hardcopyeinrichtung 26 und damit auch parallel zur Wand, an der die Hardcopyeinrichtung 26 aufgehängt ist, erfolgen. Auf diese Weise kann die Gerätetiefe der Hardcopyeinrichtung 26 auf weniger als 30 cm minimiert werden.

Wie im Zusammenhang mit den Ausführungsbeispielen näher erläutert wurde, erfolgt die Wandmontage der einzelnen Komponenten, d. h. des Scanners 10 und/oder der Workstationeinrichtung 20 und/oder der Hardcopyeinrichtung 26, vorzugsweise hängend. Eine Wandmontage der jeweiligen Komponente kann jedoch prinzipiell auf jede Art der Anbringung an eine Wand erfolgen, bei welcher keine Standfläche für die jeweilige Komponente auf dem Boden erforderlich ist. Die jeweilige Komponente ist dabei im Wesentlichen nur an der Wand befestigt. Die Befestigung an der Wand kann hierbei direkt, z. B. durch Aufhängen, Festschrauben und dergleichen, oder indirekt, z. B. durch Aufstellen oder Einsetzen der Komponente auf bzw. in eine an der Wand befestigte Halterung oder durch Anbringen an ein an der Wand befestigtes und zur Höhenverstellung der Komponente ausgebildetes Halterungssystem, erfolgen.

Die erfindungsgemäße Wandmontage der kompakten Vorrichtung erlaubt in vielen Fällen eine Integration dieser Vorrichtung in einem Röntgenraum, obwohl dort der zur Verfügung stehende Standplatz meist durch den hohen Abschirmaufwand begrenzt ist. Die Integration der Vorrichtung in den Röntgenraum führt zu erheblichen Vorteilen im Arbeitsablauf einer Röntgenuntersuchung, da hierdurch eine schnelle Kontrolle der Aufnahmequalität in Form einer Darstellung der erfaßten Bilddaten auf einem Bildschirm und/oder einer Hardcopy ermöglicht wird und ein Verlassen des Röntgenraums bzw. des in diesem Raum befindlichen Patienten zur Diagnose anhand der Röntgenaufnahme nicht mehr erforderlich ist. Die Aufhängung innerhalb des Röntgenraums kann insbesondere dort erfolgen, wo vorher ein konventioneller Leuchtschirm angebracht war, um einen Röntgenfilm zu betrachten.

## Patentansprüche

1. Vorrichtung zum Auslesen einer Bildinformation aus einem fotostimulierbaren Bildträger (44) mit einem Gehäuse (12), in dem ein Scanner (10) zum Erfassen der Bildinformation des Bildträgers (44) vorgesehen ist, **dadurch gekennzeichnet, dass** an dem Gehäuse (12) eine Einrichtung (20) zum Sichtbarmachen der erfassten Bildinformation angebracht ist.

2. Vorrichtung nach Anspruch 1, **dadurch gekennzeichnet, dass** das Gehäuse (12) eine Öffnung (18) zum Zuführen des in einer Kassette (13) befindlichen Bildträgers (44) zu dem Scanner (10) aufweist.

3. Vorrichtung nach einem der vorhergehenden Ansprüche, **dadurch gekennzeichnet, dass** die Einrichtung zum Sichtbarmachen der erfassten Bildinformation eine Einheit (20), gegebenenfalls mit einem weiteren Gehäuse, umfassend einen Bildschirm (22) und/oder ein Bedienfeld (24) aufweist.

4. Vorrichtung nach Anspruch 3, **dadurch gekennzeichnet, dass** der Bildschirm (22) und/oder das Bedienfeld (24) im Wesentlichen parallel zu einer größten Seitenfläche des Gehäuses (12), in dem der Scanner (10) positioniert ist, angeordnet ist.

5. Vorrichtung nach einem der Ansprüche 3 oder 4, **dadurch gekennzeichnet, dass** der Bildschirm (22) und/oder das Bedienfeld (24) im Wesentlichen vor dem Gehäuse (12) angeordnet ist.

6. Vorrichtung nach einem der vorhergehenden Ansprüche, **dadurch gekennzeichnet, dass** eine Hardcopyeinrichtung (26) im Wesentlichen neben dem Gehäuse (12) angeordnet ist.

7. Vorrichtung nach Anspruch 6, **dadurch gekennzeichnet, dass** ein Gehäuse (30) der Hardcopyeinrichtung (26) so ausgebildet und mit dem Gehäuse (12) verbunden ist, dass das Gehäuse (30) der Hardcopyeinrichtung (26) als Führung für eine dem Scanner (10) zuzuführende Kassette (13) dient.

8. Vorrichtung nach einem der Ansprüche 6 oder 7, **dadurch gekennzeichnet, dass** das Gehäuse (30) der Hardcopyeinrichtung (26) und das Gehäuse (12), in dem der Scanner (10) positioniert ist, mit jeweils einer größten Seitenfläche im Wesentlichen entlang einer Ebene angeordnet sind.

9. Vorrichtung nach einem der vorhergehenden Ansprüche, **dadurch gekennzeichnet, dass** der Scanner (10) und/oder die Einheit (20) und/oder die Hardcopyeinrichtung (26) modular zusammensetzbar sind.

10. Vorrichtung nach einem der vorhergehenden Ansprüche, **dadurch gekennzeichnet, dass** die Vorrichtung zur Wandmontage ausgebildet ist.

11. Vorrichtung nach Anspruch 10, **dadurch gekennzeichnet, dass** das Gehäuse (12) zu einer hängenden Wandmontage mindestens eine Ausgestaltung (42) zur Aufhängung an eine Wand, insbesondere mindestens ein Aufhängeelement, aufweist.

12. Vorrichtung nach Anspruch 11, **dadurch gekennzeichnet, dass** die mindestens eine Ausgestaltung (42) zur Aufhängung derart ausgebildet ist, dass die Vorrichtung höhenverstellbar ist.

13. Vorrichtung nach einem der Ansprüche 10 bis 12, **dadurch gekennzeichnet, dass** die Vorrichtung derart zur Wandmontage ausgebildet ist, dass das Gehäuse (12) mit einer größten Seitenfläche des Gehäuses (12) im Wesentlichen parallel zu einer Wand an der Wand montierbar ist.

14. Vorrichtung nach einem der vorhergehenden Ansprüche, **dadurch gekennzeichnet, dass** der Scanner (10) derart ausgebildet ist, dass der fotostimulierbare Bildträger (44) innerhalb des Scanners (10) im Wesentlichen parallel zu einer größten Seitenfläche des Gehäuses (12) auslesbar und/oder bewegbar ist.

15. Vorrichtung nach einem der vorhergehenden Ansprüche, **dadurch gekennzeichnet, dass** in dem Gehäuse (12), in dem der Scanner (10) positioniert ist, eine Löscheinrichtung zum Löschen der Bildinformation des Bildträgers (44) vorgesehen ist.

16. Vorrichtung nach einem der vorhergehenden Ansprüche, **dadurch gekennzeichnet, dass** der Scanner (10) einen Scankopf zum Erfassen der Bildinformation des Bildträgers (44) umfaßt und der Scankopf
- eine Lichtquelle zur Beleuchtung des Bildträgers (44) mit Anregungslicht, welches zur Anregung von Emissionslicht im Bildträger (44) geeignet ist, und
- einen Detektor zum Erfassen des im beleuchteten Bildträger (44) angeregten Emissionslichts
aufweist.

17. Vorrichtung nach Anspruch 16, **dadurch gekennzeichnet, dass** die Lichtquelle zur Beleuchtung eines linienförmigen Bereichs auf dem Bildträger (44) ausgebildet ist.

18. Vorrichtung nach Anspruch 17, **dadurch gekennzeichnet, dass** die Lichtquelle eine Vielzahl von in einer geraden Linie angeordneten Leuchtmitteln, insbesondere Leuchtdioden (LEDs) und/oder Laserdioden, aufweist.

19. Vorrichtung nach einem der Ansprüche 16 bis 18, **dadurch gekennzeichnet, dass** der Detektor zum ortsaufgelösten Erfassen des, insbesondere im linienförmigen Bereich des Bildträgers (44), angeregten Emissionslichts ausgebildet ist.

20. Vorrichtung nach Anspruch 19, **dadurch gekennzeichnet, dass** der Detektor eine Vielzahl von entlang einer geraden Linie angeordneten Detektorelementen, insbesondere Photodioden oder Charge-Coupled-Devices (CCDs), aufweist.

21. Vorrichtung nach einem der Ansprüche 16 bis 20, **dadurch gekennzeichnet, dass** ein erster Transportmechanismus zur Bewegung des Scankopfes über den Bildträger (44) vorgesehen ist.

22. Vorrichtung nach Anspruch 21, **dadurch gekennzeichnet, dass** der erste Transportmechanismus als Linearantrieb ausgebildet ist, welcher einen Antriebsmotor und einen Seilantrieb umfaßt, wobei der Antriebsmotor und der Seilantrieb derart miteinander gekoppelt sind, daß eine Rotationsbewegung des Antriebsmotors in eine Linearbewegung des Seilantriebs umgesetzt wird.

23. Vorrichtung nach einem der Ansprüche 16 bis 22, **dadurch gekennzeichnet, dass** eine Scanbühne (46) vorgesehen ist, auf welcher der Bildträger (44) aufliegen und an welcher der Scankopf geführt werden kann.

24. Vorrichtung nach Anspruch 23, **dadurch gekennzeichnet, dass** die Scanbühne (46) separate Führungsflächen aufweist, an welchen der Scankopf geführt werden kann.

25. Vorrichtung nach einem der Ansprüche 16 bis 24, **dadurch gekennzeichnet, dass** ein zweiter Transportmechanismus zur Bewegung des Bildträgers (44) am Scankopf vorbei vorgesehen ist.

26. Vorrichtung nach Anspruch 25, **dadurch gekennzeichnet, dass** der zweite Transportmechanismus mindestens einen Greifarm zur Entnahme eines in einer Kassette (13) bereitgestellten Bildträgers (44) und/oder zur Rückführung eines herausgezogenen Bildträgers (44) in die Kassette (13) umfaßt, wobei der Bildträger (44) während der Entnahme bzw. Rückführung am Scankopf vorbei bewegt wird.

27. Vorrichtung nach einem der Ansprüche 3 bis 26, **dadurch gekennzeichnet, dass** der Bildschirm (22) derart ausgestaltet ist, dass dieser außer zum Sichtbarmachen der erfassten Bildinformation auch als Hintergrundbeleuchtung für Röntgenfilme dienen kann.

28. Vorrichtung nach Anspruch 27, **dadurch gekennzeichnet, dass** der Bildschirm (22) in einem Beleuchtungsmodus betreibbar ist, in welchem dieser einen gleichmäßig hellen, Licht emittierenden Leuchtschirm zur Hintergrundbeleuchtung von Röntgenfilmen bildet.
